# EUROPÄISCHE PATENTANMELDUNG

(11) **EP 1 821 259 A2**
(43) Veröffentlichungstag der Anmeldung: **22.08.2007**
(21) Anmeldenummer: 06121773.3
(22) Anmeldetag: 05.10.2006
(51) Int. Cl.: G07B 15/00

(54) **Verfahren zur Ermittlung mautbehafteter Wegstreckenlängen**

(30) Priorität: 10.02.2006 DE 102006006307
(71) Anmelder: SIEMENS AKTIENGESELLSCHAFT, 80333 München (DE)
(72) Erfinder: Renner, Alexander, 1120, Wien (AT)
(74) Vertreter: Berg, Peter

(57) **Zusammenfassung**

Verfahren zur Ermittlung der auf mautpflichtigen Straßenabschnitten eines Wegenetzes zurückgelegten Distanz zur Erhebung der Mautgebühr von Fahrzeugen mithilfe einer fahrzeugseitigen Positionsermittlungseinheit und vorzugsweise einer mit ihr in Datenverbindung stehenden, fahrzeugexternen Verwaltungseinheit, wobei die von der fahrzeugseitigen Positionsermittlungseinheit mithilfe von Positionsinformationen ausstrahlenden Einrichtungen ermittelten Positionsdaten (Pᵢ) des Fahrzeugs in ein elektronisches Abbild des Wegenetzes übertragen werden, und bei Ermittlung von Fahrzeugpositionen (Pⱼ), die sich innerhalb von im elektronischen Abbild des Wegenetzes als mautpflichtig gekennzeichneten Straßenabschnitten (S) befinden, die Mautgebühr anhand der Länge der Verbindungslinien zwischen zwei jeweils aufeinanderfolgenden, mautbehafteten Positionsdaten (Pⱼ, Pⱼ₊₁) berechnet wird. Erfindungsgemäß ist vorgesehen, dass eine die mautbehafteten Positionsdaten (Pⱼ) verbindende und in ihrem Verlauf, ihrer Steigung und ihrer Krümmung kontinuierliche Interpolationskurve (K) ermittelt wird, wobei die Verbindungslinien zwischen zwei jeweils aufeinanderfolgenden, mautbehafteten Positionsdaten (Pⱼ, Pⱼ₊₁) Teilstücke dieser Interpolationskurve (K) sind.

## Beschreibung

Die vorliegende Erfindung bezieht sich auf ein Verfahren zur Ermittlung der auf mautpflichtigen Straßenabschnitten eines Wegenetzes zurückgelegten Distanz zur Erhebung der Mautpflicht von Fahrzeugen mithilfe einer fahrzeugseitigen Positionsermittlungseinheit und einer mit ihr in Datenverbindung stehenden, fahrzeugexternen Verwaltungseinheit, wobei die von der fahrzeugseitigen Positionsermittlungseinheit mithilfe von Positionsinformationen ausstrahlenden Einrichtungen ermittelten Positionsdaten des Fahrzeugs in ein elektronisches Abbild des Wegenetzes übertragen werden, und bei Ermittlung von Fahrzeugpositionen, die sich innerhalb von im elektronischen Abbild des Wegenetzes als mautpflichtig gekennzeichneten Straßenabschnitten befinden, die Mautpflicht anhand der Länge der Verbindungslinien zwischen zwei jeweils aufeinanderfolgenden, mautbehafteten Positionsdaten berechnet wird, gemäß dem Oberbegriff von Anspruch 1.

Mauterfassungssysteme dieser Art kommen zum Einsatz, um eine festgesetzte Gebühr für die Nutzung von Straßen, Brücken, Tunnels oder anderer Infrastrukturbauwerke einzuheben. Die erhaltenen Mautgebühren dienen neben ihrer Funktionalität als zusätzliche Einnahmequelle für die öffentlichen Haushalte vorwiegend der Aufrechterhaltung bestehender Infrastruktur sowie der Finanzierung zukünftiger Straßenbauprojekte. Über die Vergebührung der Straßenbenutzung kann weiters eine Internalisierung von externen Folgekosten des Verkehrsbetriebes, die vom Verursacher selbst nicht vollständig getragen werden, erzielt werden. So können etwa ökologische und soziale Kosten zufolge Lärm- und Luftverschmutzung sowie die aus Unfällen resultierenden Ressourcenausfallkosten mittels entsprechender Mautveranschlagung abgegolten werden.

Darüber hinaus soll mittels flächendeckender Mauterfassungssysteme eine Entlastung der Umwelt von Verkehrsemissionen erreicht werden, indem für die motorisierte Verkehrsteilnahme ein adäquater Preis festgesetzt wird, um den LKW-Schwerverkehr solcherart zur Nutzung anderer Transportwege, beispielsweise der Schiene, oder Verbesserung der Vertriebslogistik zu motivieren. Da Mauterfassungssysteme aber ebenso auch den Individualverkehr durch PKW-Benutzer betreffen, wird der ökologische Aspekt generell ins öffentliche Bewusstsein gehoben und soll einer langfristigen Strategie zur CO₂-Reduktion dienen.

Nutzungsabhängige Mautsysteme zeichnen sich dadurch aus, dass der zu entrichtende Mautbetrag von der tatsächlich erfolgten Streckennutzung abhängig ist. Der Mautbetrag kann dabei anhand tatsächlich zurückgelegter Entfernungen, durchfahrener Streckenabschnitte, Tunneldurchquerungen oder beispielsweise auch zeitlicher Aufenthalte in bestimmten Zonen errechnet werden. Es ist ebenfalls möglich, entfernungsbezogene Gebühren anhand der zeitlichen Frequentierung von Verkehrsstrecken so zu gewichten, dass beispielsweise für eine Straßennutzung während der Hauptverkehrszeiten bzw. des Berufsverkehrs ein höherer Tarif verrechnet wird als für eine Nutzung abseits der bekannten Stoßzeiten. Es ist weiters üblich, die Höhe der Maut von verschiedenen Eigenschaften des Mautteilnehmers bzw. seines Fahrzeuges abhängig zu machen oder eine Maut bei Vorliegen bestimmter begünstigungswürdiger Eigenschaften ganz entfallen zu lassen. Als Beurteilungskriterien zur Mautbemessung werden zumeist Größe und Gewicht eines Fahrzeuges herangezogen, aber auch Unterschiede hinsichtlich der Achszahl, der Schadstoffklasse und der Art der transportierten Güter können berücksichtigt werden.

Ebenso existieren in vielen europäischen Ländern Sondermautstrecken, bei welchen eine zusätzliche Maut vorgeschrieben wird. Eine solche zusätzliche, zur regulären Maut hinzusummierte Maut wird bei manchen Tunnels, Brücken oder Privatstraßen eingehoben, welche unter besonders kostenintensivem Einsatz errichtet wurden oder in ihrer Erhaltung besonders aufwändig sind, wie beispielsweise Gebirgsstrassen oder Tunnelstrassen.

Bereits bekannte, nutzungsabhängige Mauterfassungssysteme arbeiten mit fahrzeugseitigen, mobilen Positionsermittlungseinheiten, sogenannten OBUs (On Board Units). Dabei handelt es sich um Geräte, die in ein Fahrzeug eingebaut werden, um eine automatische Abrechnung von Mautgebühren innerhalb eines Mauterfassungssystems anhand der vom Fahrzeug im Mauterfassungssystem zurückgelegten Strecke zu ermöglichen, in dem sie die Grundlage zur Berechnung der Mautgebühren detektieren, nämlich die zurückgelegte Wegstrecke bzw. die benutzten Streckenabschnitte. Die deutschen, französischen, italienischen, österreichischen und spanischen Autobahnbetreiber, aber auch zunehmend weitere Länder inner- und außerhalb Europas ziehen OBUs zur Detektierung von zurückgelegten Wegstrecken bzw. befahrenen Streckenabschnitten heran. Die OBUs können dabei käuflich erworben oder gemietet werden und sind mit einer für das jeweilige Mauterfassungssystem eindeutigen Kennung versehen, die im Zuge des Ausgabeprozesses, einer bestimmten natürlichen oder juristischen Person zugeordnet wird, um eine Verrechnung der angefallenen Mautgebühren zu ermöglichen.

Prinzipiell ist der Einsatz von mobilen Positionsermittlungseinheiten in zwei unterschiedlichen Mauterfassungssystemen üblich, nämlich einerseits in GNSS (Global Navigation Satellite System)-basierten Systemen und andererseits in auf Infrastruktur-basierten Systemen.

GNSS-basierte Systeme arbeiten in den meisten Fällen mittels dem unter dem Kürzel GPS (Global Positioning System) bekannten Satellitenpositionsbestimmungssystem. Andere Satellitenpositionsbestimmungssysteme sind bereits in Planung. Die OBU kann mit Hilfe der von den Satelliten ausgestrahlten Signale eine Positionsbestimmung vornehmen. Dadurch ist es möglich, den Weg, den die OBU innerhalb eines Mauterfassungssystems zurücklegt, zu bestimmen.

Infrastruktur-basierte Systeme arbeiten mit an den Straßen eingerichteten Infrastrukturen, wie beispielsweise Mautportalen. Die OBU kann in diesem Fall beispielsweise via Mikrowelle mit den Mautportalen kommunizieren, wobei anhand dieser Kommunikation nachvollzogen werden kann, welche Streckenabschnitte von der OBU befahren wurden. Es sind Infrastruktur-basierte Systeme bekannt, bei welchen die Positionsermittlungseinheit aktiv Signale an die Mautportale übermittelt, und die auf diese Art und Weise erhaltenen Positionsdaten an eine zentrale, fahrzeugexterne Verwaltungseinheit zwecks Mautgebührenberechnung weitergegeben werden. Es sind aber auch Infrastruktur-basierte Systeme bekannt, bei welchen die Positionsermittlungseinheit aufgrund der empfangenen Positionsinformationen der Mautportale ein Guthaben, dass der mobilen Detektionseinheit beispielsweise über eine Wertkarte mitgeteilt wurde, von der Wertkarte abbucht.

Für die vorliegende Erfindung interessieren vor allem die GNSS-basierten Systeme. Sie ist jedoch auch bei auf Infrastruktur-basierenden Systemen anwendbar.

Die bei GNSS-basierten Systemen eingesetzten mobilen Positionsermittlungseinheiten sind dabei in der Lage, die von entsprechenden Satelliten ausgesendeten Signale zur Bestimmung der aktuellen Position der Positionsermittlungseinheit (OBU) und somit des Fahrzeuges, in welchem die OBU angeordnet ist, zu empfangen und zu verwerten. Des Weiteren sind die mobilen Positionsermittlungseinheiten (OBUs) in der Lage, die jeweilige OBU im Mauterfassungssystem anzumelden und eine Datenverbindung zu einer zentralen, fahrzeugexternen Verwaltungseinheit herzustellen. Auf diese Art und Weise kann sich die OBU im System des Mautbetreibers anmelden und jene Daten an die zentrale Verwaltungseinheit übertragen, welche im Mauterfassungssystem für Be- bzw. Abrechnungen der Mautgebühren erforderlich sind. Aktuell arbeiten die OBUs hierbei nach dem GSM-Standard. Prinzipiell sind jedoch auch andere Systeme, die zur drahtlosen Datenübertragung geeignet sind, einsetzbar.

Im Rahmen einer "dezentralen" Variante werden die von der Positionsermittlungseinheit ermittelten Positionsdaten direkt von der OBU ausgewertet, d.h. diese werden direkt von der OBU mit in der OBU gespeicherten Geodaten zwecks Mautobjekterkennung verglichen. Die OBU entscheidet in diesem Fall, ob mautpflichtige Strecken zurückgelegt wurden oder nicht, d.h. sie identifiziert jene Gebiete, Strecken oder Streckenabschnitte, die mautpflichtig sind und von der OBU bzw. dem entsprechenden Fahrzeug befahren wurden.

Unter Mautobjekterkennung versteht man im Falle von GNSS-basierten Systemen den Vergleich der von der Positionsermittlungseinheit ermittelten Positionsdaten mit im Mauterfassungssystem gespeicherten Geodaten und darin enthaltenen Mautobjekten. Bei den Geodaten handelt es sich um ein elektronisches Abbild des Wegenetzes, in dem als mautpflichtig gekennzeichnete Straßenabschnitte als Mautobjekte vermerkt sind.

Innerhalb der Geodaten können auch sogenannte Geoobjekte definiert sein, welche definierte Abschnitte oder Positionen im entsprechenden geographischen Gebiet beschreiben. Spezielle Geoobjekte sind etwa die Mautobjekte, also jene geographischen Bereiche bzw. jene Strassen und/oder Gebiete, für deren Benützung Maut zu entrichten ist. Aber auch andere Bereiche und Straßen, die nicht zu bemauten sind, können als Geoobjekte definiert sein. Befinden sich die ermittelten Positionsdaten innerhalb zu bemautender Geoobjekte (Mautobjekte), bzw. wurde das Überschreiten einer Grenze eines solchen Geoobjektes (Mautobjektes) detektiert, so ist für den innerhalb des Geoobjektes (Mautobjektes) befindlichen Streckenabschnitt bzw. für den jenseits der überschrittenen Grenze des Geoobjektes (Mautobjektes) befindlichen Streckenabschnitt eine Mautgebühr zu entrichten.

Konkret werden zur Ermittlung der auf mautpflichtigen Straßenabschnitten eines Wegenetzes zurückgelegten Distanz zur Erhebung der Mautgebühr in definierten, zeitlichen Abständen Positionsdaten erhoben, also die Fahrzeugposition bestimmt. Die zurückgelegte Distanz wird anhand geradliniger Verbindungslinien zwischen den Fahrzeugpositionen bestimmt, wobei die Summe der Längen der einzelnen Verbindungslinien als zurückgelegte Wegstrecke herangezogen wird. Je kürzer der zeitliche Abstand der Positionsbestimmung gewählt wird, desto genauer gibt diese Summe der Längen der einzelnen Verbindungslinien die tatsächlich zurückgelegte Wegstrecke wieder, da in diesem Fall die Ungenauigkeit der Annahme geradliniger Wegstrecken zwischen den einzelnen Positionsbestimmungen nur gering ist. Allerdings nimmt in diesem Fall die zu verarbeitende Datenmenge zu, die nicht nur Übertragungs- und Verarbeitungsressourcen insbesondere der Positionsermittlungseinheiten belastet, sondern durch die häufige Positionsbestimmung auch einen erhöhten Energieverbrauch der Positionsermittlungseinheit nach sich zieht.

Wird andererseits der zeitliche Abstand der Positionsbestimmung größer gewählt, so kann zwar die zu verarbeitende Datenmenge reduziert werden, allerdings ergeben sich zunehmende Ungenauigkeiten aufgrund der Annahme geradliniger Wegstrecken zwischen den einzelnen Positionsbestimmungen. Die Summe der Längen der einzelnen Verbindungslinien nimmt in diesem Fall vielmehr die Form eines Polygonzuges an, dessen Gesamtlänge die tatsächlich zurückgelegte Wegstrecke nur mehr ungenau wiedergibt.

Es ist daher das Ziel der Erfindung, diese Nachteile zu vermeiden und ein Verfahren bereitzustellen, das einerseits eine Reduktion der zu verarbeitenden Positionsdaten ermöglicht, und andererseits die Genauigkeit der Ermittlung der zurückgelegten Wegstrecke aufrechterhält bzw. sogar verbessert.

Diese Ziele werden durch die Merkmale von Anspruch 1 erreicht. Anspruch 1 bezieht sich auf ein Verfahren zur Ermittlung der auf mautpflichtigen Straßenabschnitten eines Wegenetzes zurückgelegten Distanz zur Erhebung der Mautgebühr von Fahrzeugen mithilfe einer fahrzeugseitigen Positionsermittlungseinheit und vorzugsweise einer mit ihr in Datenverbindung stehenden, fahrzeugexternen Verwaltungseinheit, wobei die von der fahrzeugseitigen Positionsermittlungseinheit mithilfe von Positionsinformationen ausstrahlenden Einrichtungen ermittelten Positionsdaten des Fahrzeugs in ein elektronisches Abbild des Wegenetzes übertragen werden, und bei Ermittlung von Fahrzeugpositionen, die sich innerhalb von im elektronischen Abbild des Wegenetzes als mautpflichtig gekennzeichneten Straßenabschnitten befinden, die Mautgebühr anhand der Länge der Verbindungslinien zwischen zwei jeweils aufeinanderfolgenden, mautbehafteten Positionsdaten berechnet wird. Erfindungsgemäß ist vorgesehen, dass eine die mautbehafteten Positionsdaten verbindende und in ihrem Verlauf, ihrer Steigung und ihrer Krümmung kontinuierliche Interpolationskurve ermittelt wird, wobei die Verbindungslinien zwischen zwei jeweils aufeinanderfolgenden, mautbehafteten Positionsdaten Teilstücke dieser Interpolationskurve sind. Es werden somit aufeinanderfolgende Positionsdaten nicht durch lineare Verbindungslinien in Form eines Polygonzuges miteinander verbunden, deren Gesamtlänge als zurückgelegte Wegstrecke zur Mautberechnung herangezogen wird, sondern es wird eine Interpolationskurve verwendet. Im Unterschied zu einem Polygonzug ist die Interpolationskurve allerdings in ihrem Verlauf, ihrer Steigung und ihrer Krümmung kontinuierlich auszuführen. Die Interpolationskurve ist somit in mathematischer Hinsicht zweifach stetig differenzierbar, was ihr insbesondere in den Positionspunkten einen "glatten" Verlauf verleiht.

Die Auffindung einer Interpolationskurve, die mehrere Positionsdaten verbindet, ist in der numerischen Mathematik wohlbekannt, und unterschiedliche Interpolationsmethoden stehen hierfür zur Verfügung. Es sei angemerkt, dass die erfindungsgemäße Erstellung einer Interpolationskurve ohne Abgleich mit dem elektronischen Abbild des Wegenetzes erfolgen kann, sondern ausschließlich anhand der ermittelten Positionsdaten zu bewerkstelligen ist. Immerhin wäre es etwa denkbar, als Randbedingungen einer Interpolation das elektronische Abbild des Wegenetzes heranzuziehen. Es hat sich stattdessen in der Praxis gezeigt, dass hinsichtlich der Approximation der tatsächlich zurückgelegten Wegstrecke eine in ihrem Verlauf, ihrer Steigung und ihrer Krümmung kontinuierliche Interpolationskurve jedenfalls bessere Ergebnisse liefert als das bloße lineare Verbinden der Positionsdaten.

Es ist somit mithilfe des erfindungsgemäßen Verfahrens möglich, die Anzahl der Positionsdaten zu reduzieren, ohne dass die Genauigkeit der Weglängenermittlung zu stark beeinträchtigt wird. Bei gleichbleibender Anzahl an Positionsdaten ist es andererseits möglich, die Weglängenermittlung mithilfe des erfindungsgemäßen Verfahrens genauer durchzuführen, als mit der herkömmlichen Methode der linearen Interpolation.

Anspruch 2 schlägt eine bevorzugte Methode der Interpolation vor, gemäß der es sich bei den Verbindungslinien zwischen zwei jeweils aufeinanderfolgenden, mautbehafteten Positionsdaten um kubische Polynome handelt. Die Positionsdaten werden somit stückweise interpoliert, wobei es sich bei der Verbindungslinie zwischen zwei aufeinanderfolgenden Positionsdaten um ein Polynom dritter Ordnung handelt. Die erfindungsgemäße Forderung nach einer Interpolationskurve mit kontinuierlichem Verlauf sowie kontinuierlicher Steigung und Krümmung erfordert es, dass in jedem Positionsdatenpunkt das mit dem vorangegangenen Datenpunkt interpolierte Polynom und das mit dem nachfolgenden Datenpunkt interpolierte Polynom in ihrem Verlauf, ihrer Steigung und ihrer Krümmung stetig ineinander übergehen. Die Interpolationskurve wird somit in ihrem gesamten Verlauf zweifach stetig differenzierbar, insbesondere auch an allen Positionsdatenpunkten.

Anspruch 3 und 4 beziehen sich auf unterschiedliche Varianten von GNSS-basierten Systemen hinsichtlich der Verarbeitung der mittels der Positionsermittlungseinheit ermittelten Positionsdaten. Bei einer ersten Variante werden die von der Positionsermittlungseinheit ermittelten Positionsdaten direkt von der OBU ausgewertet, d.h. diese werden direkt von der OBU mit in der OBU gespeicherten Geodaten zwecks Mautobjekterkennung verglichen. Die OBU entscheidet in diesem Fall, ob mautpflichtige Strecken zurückgelegt wurden oder nicht, d.h. sie identifiziert jene Gebiete, Strecken oder Streckenabschnitte, die mautpflichtig sind und von der OBU bzw. dem entsprechenden Fahrzeug befahren wurden.

Im Rahmen dieser Variante wird gemäß Anspruch 3 auch die Ermittlung der Interpolationskurve von der fahrzeugseitigen Positionsermittlungseinheit durchgeführt, und in weiterer Folge die mautbehaftete Wegstreckenlänge ermittelt. Das Ergebnis kann dann entweder direkt ohne weitere Aufbereitung an die zentrale Verwaltungseinheit übermittelt werden, etwa in verschlüsselter und/oder komprimierter Form, um zur Verknüpfung mit Tarifdaten und zur Bestimmung der Mautgebühr zu dienen. Alternativ dazu können die aus der Mautobjekterkennung hervorgehenden Daten auch von der OBU selbst mit entsprechenden Tarifdaten, die in diesem Fall ebenfalls in der OBU gespeichert sind, verknüpft werden, um einen Mautbetrag zu errechnen, der dann entweder über die Datenverbindung zur zentralen Verwaltungseinheit übermittelt wird, wo dann nur mehr die Rechnungslegung als solches stattfindet, oder aber von einer Wertkarte direkt an der OBU abgebucht wird.

Diese Variante (dezentrales System) erfordert eine mit ausreichender Rechenleistung und mit ausreichendem Speicherplatz ausgestattete OBU, da einerseits sämtliche Geodaten des mautpflichtigen Streckennetzes in der OBU gespeichert werden müssen, und andererseits die Berechnung, ob mautpflichtige Strecken befahren wurden, also die Mautobjekterkennung, ebenfalls in der OBU stattfindet. Für den Fall, dass auch die Berechnung der fälligen Mautgebühr in der OBU stattfindet, also die Verknüpfung der durch die Mautobjekterkennung erhaltenen Daten mit Tarifdaten, ist zusätzliche Rechenleistung und zusätzlicher Speicherplatz für die Tarifdaten erforderlich. Vorteilhaft bei einer solchen Ausführungsvariante ist jedoch die Tatsache, dass lediglich die Daten aus der Mautobjekterkennung bzw. die Mautgebührendaten an die zentrale Verwaltungseinheit übertragen werden müssen. Eine Übertragung der von der Positionsermittlungseinheit ermittelten Positionsdaten an die zentrale Verwaltungseinheit ist nicht erforderlich, was somit die an die Verwaltungseinheit zu übertragende und von letzterer zu verarbeitende Datenmenge stark reduziert. Änderungen der Geodaten bzw. der Mauttarife erfordern jedoch die Aktualisierung jeder OBU über die Datenverbindung. Bei solchen Änderungen kann der erforderliche Datentransfer jedoch relativ gering gehalten werden, in dem nur jene Daten übertragen werden, welche einer Änderung unterworfen worden sind.

Die zweite Variante eines Mauterfassungssystems (zentrales System) sieht vor, dass die von der Positionsermittlungseinheit ermittelten Positionsdaten, aufbereitet oder unaufbereitet, in ihrer Gesamtheit über die Datenverbindung an die zentrale Verwaltungseinheit übermittelt werden und die Auswertung (Mautobjekterkennung, Verknüpfung mit Tarifdaten, Rechnungslegung, etc.) zentral vorgenommen wird. Im Rahmen dieser Variante wird gemäß Anspruch 4 auch die Ermittlung der Interpolationskurve von der fahrzeugexternen Verwaltungseinheit durchgeführt. Dieses System hat den Vorteil, dass Änderungen der Geodaten oder der Mauttarife sehr einfach in die zentrale Verwaltungseinheit eingegeben werden können und damit keine Aktualisierung jeder in Betrieb befindlichen OBU erforderlich ist. Diese Variante weist zwar prinzipiell den Nachteil auf, dass sehr viele Positionsdaten an die zentrale Verwaltungseinheit übertragen werden müssen, sodass die an die Verwaltungseinheit zu übertragende und von letzterer zu verarbeitende Datenmenge sehr groß ist. Durch das erfindungsgemäße Verfahren lässt sich allerdings die Anzahl der zu übertragenden Positionsdaten reduzieren, da die geringere Anzahl an Positionsdaten durch die erfindungsgemäße, genauere Ermittlung der Wegstreckenlänge kompensiert wird.

Anspruch 5 sieht schließlich vor, dass die Positionsermittlungseinheit die Signale eines Satellitenpositionsbestimmungssystems verwertet. Es handelt sich bei dieser Ausführungsvariante somit um ein GNSS-basiertes System.

Die Erfindung wird im Folgenden anhand der beiliegenden Figuren näher erläutert. Es zeigen hierbei die
FIG 1 eine schematische Darstellung eines elektronischen Abbildes eines Wegenetzes mit einem als mautpflichtig gekennzeichneten Straßenabschnitt und die darin eingetragenen Positionsdaten, und
FIG 2 eine Gegenüberstellung einer Wegstreckenermittlung gemäß dem Stand der Technik und jener gemäß der Erfindung.

Das Mauterfassungssystem eines Mautbetreibers deckt ein bestimmtes geographisches Gebiet ab, beispielsweise das Hoheitsgebiet eines Staates oder das Gemeindegebiet einer Stadt, und umfasst im Wesentlichen eine zentrale Verwaltungseinheit sowie eine Anzahl von mobilen Positionsermittlungseinheiten. Jede der Positionsermittlungseinheiten wird mit zumindest einer Lokalisierungseinheit und vorzugsweise einer Sende/Empfangseinheit auf GSM-Basis ausgestattet. Die Lokalisierungseinheit ermöglicht die Detektierung von Positionsdaten aufgrund von Kommunikation mit Positionsinformationen ausstrahlenden Einrichtungen, wie beispielsweise Satelliten oder an zu bemauteten Straßen installierter Infrastruktur wie beispielsweise Mautportalen. Die Sende/Empfangseinheit dient zum Aufbau einer Datenverbindung mit der zentralen Verwaltungseinheit und in weiterer Folge zum Datenaustausch über diese Datenverbindung.

Im Mauterfassungssystem, beispielsweise in der zentralen Verwaltungseinheit oder alternativ in der mobilen Positionsermittlungseinheit, sind Geodaten abgespeichert, welche dem geographischen Gebiet, welches vom Mauterfassungssystem abgedeckt wird, entsprechen. Die Geodaten umfassen auch sogenannte Geoobjekte, wie bereits ausgeführt wurde. Einige davon sind als Mautobjekte M, etwa als mautpflichtig gekennzeichneten Straßenabschnitten S, definiert. Dabei handelt es sich um jene geographischen Gebiete bzw. Bereiche oder Verkehrswege, deren Befahrung an die Entrichtung einer Mautgebühr gekoppelt ist.

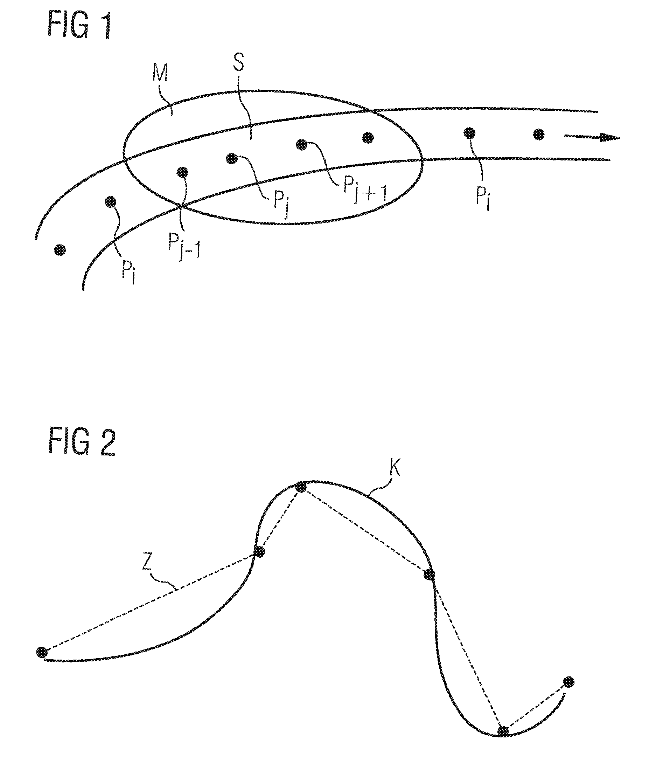

In FIG1 bewegt sich die mobile Detektionseinheit, welche in einem Kraftfahrzeug angeordnet ist, entlang einem Strassenabschnitt S in Richtung des Pfeils. Beim Strassenabschnitt S handelt es sich um ein typisches Geoobjekt der Geodaten, das als Mautobjekt M definiert ist. Alternativ dazu könnte aber auch etwa eine Grenzlinie vorgesehen sein, welche ein Mautgebiet innerhalb eines geographischen Gebietes vom restlichen geographischen Gebiet abgrenzt. Bei dem zugeordneten Geoobjekt handelt es sich somit nicht um ein flächiges Geoobjekt, sondern um eine Grenzlinie.

Die Lokalisierungseinheit jeder mobilen Positionsermittlungseinheit ermittelt dabei kontinuierlich Positionsdaten durch Empfang von Positionsinformationen ausstrahlenden Einrichtungen. In weiterer Folge wird davon ausgegangen, dass es sich hierbei um Satelliten eines Satellitenpositionsbestimmungssystems handelt.

Gemäß einer dezentralen Ausführungsform eines Mautermittlungssystems vergleicht die mobile Positionsermittlungseinheit die ermittelten Positionsdaten mit den, in diesem Fall in der mobilen Positionsermittlungseinheit gespeicherten Geodaten zwecks Erkennung von Mautobjekten M. Dieser Vergleich ergibt etwa in Bezug auf die FIG 1, dass sich die mobile Positionsermittlungseinheit an den Positionsdaten Pᵢ (i=1,2....n) außerhalb des Mautobjekts M befindet, und für die Positionsdaten Pⱼ (i=1,2....m) innerhalb des Mautobjektes M, wobei im letzteren Fall Mautgebühren anfallen.

Im Unterschied zur herkömmlichen Art der Weglängenberechnung werden innerhalb des mautbehafteten Straßenabschnittes S aufeinanderfolgende Positionsdaten Pⱼ, Pⱼ₊₁ nicht durch lineare Verbindungslinien in Form eines Polygonzuges Z miteinander verbunden, deren Gesamtlänge als zurückgelegte Wegstrecke zur Mautberechnung herangezogen wird, sondern es wird eine Interpolationskurve K verwendet. Im Unterschied zu einem Polygonzug Z ist die Interpolationskurve K allerdings in ihrem Verlauf, ihrer Steigung und ihrer Krümmung kontinuierlich auszuführen. Die Interpolationskurve K ist somit in mathematischer Hinsicht zweifach stetig differenzierbar, was ihr insbesondere in den Positionspunkten Pⱼ einen "glatten" Verlauf verleiht. Die Interpolation ist eine Art der Approximation, wobei aber im Unterschied zu einer Ausgleichsrechnung die Stützstellen, im gegebenen Fall also die Positionsdaten Pⱼ, durch die Interpolationskurve K exakt wiedergegeben werden.

Die Auffindung einer Interpolationskurve K, die mehrere Positionsdaten verbindet, ist, wie bereits erwähnt wurde, in der numerischen Mathematik wohlbekannt, und unterschiedliche Interpolationsmethoden stehen hierfür zur Verfügung. So wäre es etwa möglich, ein Polynom n-ten Grades durch die Positionsdaten Pⱼ zu legen. Da Polynome mit zunehmendem Grad aber immer instabiler werden, d.h. zwischen den Interpolationspunkten stark schwingen, erscheint diese Art der Interpolation für die Weglängenermittlung in Mautberechnungssystemen als ungeeignet. Stattdessen wird eine stückweise Interpolation vorgeschlagen.

Eine bevorzugte Methode der Interpolation sieht dabei vor, dass es sich bei den Verbindungslinien zwischen zwei jeweils aufeinanderfolgenden, mautbehafteten Positionsdaten Pⱼ, Pⱼ₊₁ um kubische Polynome handelt. Eine solche Art der Interpolation wird auch als kubische Interpolation, oder auch als kubische Spline-Interpolation bezeichnet. Die Positionsdaten Pⱼ werden hierbei stückweise interpoliert, wobei es sich bei der Verbindungslinie zwischen zwei aufeinanderfolgenden Positionsdaten Pⱼ, Pⱼ₊₁ um ein Polynom dritter Ordnung handelt. Die erfindungsgemäße Forderung nach einer Interpolationskurve K mit kontinuierlichem Verlauf sowie kontinuierlicher Steigung und Krümmung erfordert es, dass in jedem Positionsdatenpunkt Pⱼ das mit dem vorangegangenen Datenpunkt Pⱼ₋₁ interpolierte Polynom und das mit dem nachfolgenden Datenpunkt Pⱼ₊₁ interpolierte Polynom in ihrem Verlauf, ihrer Steigung und ihrer Krümmung stetig ineinander übergehen. Die Interpolationskurve K wird somit in ihrem gesamten Verlauf zweifach stetig differenzierbar, insbesondere auch an allen Positionsdatenpunkten Pⱼ.

Der Unterschied zwischen einem Polygonzug Z und einer erfindungsgemäßen Interpolationskurve K ist in der FIG 2 schematisch dargestellt. Es ist somit mithilfe des erfindungsgemäßen Verfahrens möglich, die Anzahl der Positionsdaten Pⱼ zu reduzieren, ohne dass die Genauigkeit der Weglängenermittlung zu stark beeinträchtigt wird. Bei gleichbleibender Anzahl an Positionsdaten Pⱼ ist es andererseits möglich, die Weglängenermittlung mithilfe des erfindungsgemäßen Verfahrens genauer durchzuführen, als mit der herkömmlichen Methode der linearen Interpolation.

In weiterer Folge kann die durch das erfindungsgemäße Verfahren ermittelte, mautbehaftete Wegstreckenlänge über die Datenverbindung an die zentrale Verwaltungseinheit übermittelt werden, wo dann die Verknüpfung der Daten mit Tarifdaten, sowie die Rechnungslegung aus den so erhaltenen angefallenen Mautgebühren erfolgt. Diese Verknüpfung mit Tarifdaten kann aber auch von der mobilen Positionsermittlungseinheit vorgenommen werden, sodass die Berechnung der angefallenen Mautgebühren bereits in der mobilen Positionsermittlungseinheit erfolgt. Diese angefallenen Mautgebühren werden in weiterer Folge dann entweder über die Datenverbindung an die zentrale Verwaltungseinheit übermittelt, wo dann die Rechnungslegung erfolgt, oder aber gleich mit einer Wertkarte an der mobilen Positionsermittlungseinheit verrechnet.

Das erfindunggemäße Verfahren erscheint dabei besonders bei "flächigen" Mautobjekten M interessant, also bei Mautobjekten M in Form ausgedehnter geographischer Bereiche, die ein dichtes Wegenetz umfassen. Ein Beispiel wäre etwa die Bemautung ganzer Stadtteile oder auch einer ganzen Stadt. Falls in diesen Bereichen nicht bloß eine von der zurückgelegten Wegstrecke unabhängige Pauschalgebühr eingehoben werden soll, sondern eine wegstrecken-abhängige Maut, so erweist sich das erfindungsgemäße Verfahren beinahe als unverzichtbar für eine genaue Ermittlung der zurückgelegten Wegstrecke.

### Bezugszeichenliste

- K: Interpolationskurve
- M: Mautobjekt
- S: Straßenabschnitt
- Pᵢ, Pⱼ,: Positionsdaten
- Pⱼ₋₁: vorausgegangener Datenpunkt
- Pⱼ₊₁: nachfolgender Datenpunkt
- Z: Polygonzug

## Patentansprüche

1. Verfahren zur Ermittlung der auf mautpflichtigen Straßenabschnitten eines Wegenetzes zurückgelegten Distanz zur Erhebung der Mautgebühr von Fahrzeugen mithilfe einer fahrzeugseitigen Positionsermittlungseinheit und vorzugsweise einer mit ihr in Datenverbindung stehenden, fahrzeugexternen Verwaltungseinheit, wobei die von der fahrzeugseitigen Positionsermittlungseinheit mithilfe von Positionsinformationen ausstrahlenden Einrichtungen ermittelten Positionsdaten (Pᵢ) des Fahrzeugs in ein elektronisches Abbild des Wegenetzes übertragen werden, und bei Ermittlung von Fahrzeugpositionen (Pⱼ), die sich innerhalb von im elektronischen Abbild des Wegenetzes als mautpflichtig gekennzeichneten Straßenabschnitten (S) befinden, die Mautgebühr anhand der Länge der Verbindungslinien zwischen zwei jeweils aufeinanderfolgenden, mautbehafteten Positionsdaten (Pⱼ, Pⱼ₊₁) berechnet wird, **dadurch gekennzeichnet, dass** eine die mautbehafteten Positionsdaten (Pⱼ) verbindende und in ihrem Verlauf, ihrer Steigung und ihrer Krümmung kontinuierliche Interpolationskurve (K) ermittelt wird, wobei die Verbindungslinien zwischen zwei jeweils aufeinanderfolgenden, mautbehafteten Positionsdaten (Pⱼ, Pⱼ₊₁) Teilstücke dieser Interpolationskurve (K) sind.

2. Verfahren nach Anspruch 1,
**dadurch gekennzeichnet, dass** es sich bei den Verbindungslinien zwischen zwei jeweils aufeinanderfolgenden, mautbehafteten Positionsdaten (Pⱼ, Pⱼ₊₁) um kubische Polynome handelt.

3. Verfahren nach Anspruch 1 oder 2,
**dadurch gekennzeichnet, dass** die Ermittlung der Interpolationskurve (K) von der fahrzeugseitigen Positionsermittlungseinheit durchgeführt wird.

4. Verfahren nach Anspruch 1 oder 2,
**dadurch gekennzeichnet, dass** die Ermittlung der Interpolationskurve (K) von der fahrzeugexternen Verwaltungseinheit durchgeführt wird.

5. Verfahren nach einem der Ansprüche 1 bis 4,
**dadurch gekennzeichnet, dass** die Positionsermittlungseinheit die Signale eines Satellitenpositionsbestimmungssystems verwertet.
